# EUROPÄISCHE PATENTANMELDUNG

(11) **EP 0 710 926 A2**
(43) Veröffentlichungstag der Anmeldung: **08.05.1996**
(21) Anmeldenummer: 95116851.7
(22) Anmeldetag: 26.10.1995
(51) Int. Cl.: G06T 5/40

(54) **Verfahren zur Erstellung und Auswertung von Histogrammen**

(30) Priorität: 31.10.1994 DE 4438977
(71) Anmelder: MAZ Mikroelektronik Anwendungszentrum Hamburg GmbH, D-21079 Hamburg (DE)
(72) Erfinder: Müller, Steffen, D-21079 Hamburg (DE); Trolke, Manfred, D-21079 Hamburg (DE)
(74) Vertreter: DIEHL GLAESER HILTL & PARTNER

(57) **Zusammenfassung**

Die Erfindung bezieht sich auf ein Verfahren zur Erstellung und Auswertung von Histogrammen zwecks Bildauswertung, insbesondere zur Erkennung von Objekten, bei welchem eine Kamera einen Bilddatenstrom liefert, die Grauwerte (Pixel In) bzw. Intensitäten der einzelnen Bildpunkte des Bilddatenstroms jeweils eine bestimmte Speicherstelle eines Speichers ( Memory z. B. 1024 Speicherzellen mit jeweils 48 bit) adressierrten, der Speicherwert dieser Speicherzelle in ein Rechenwert (ArithmUnit) gegeben, mit HIlfe eines Inkrementierers um eins erhöht und sodann in die bestimmte Speicherzelle zurückgeschrieben wird, jede Speicherzelle des Speichers wird in einzelne Parts (z.B. in Parts mit 12, 4,4,4,4,4,4 und 12 bit) physikalisch unterteilt oder virtuell unterteilt, die einzelnen Parts der Speicherzellen werden unabhängig voneinander zu Paketen zusammengeschaltet bzw. kaskadiert, die jeweils die Histogrammwerte in sich überlappenden oder nicht überlappenden Fenstern im zu verarbeitenden Bild aufnehmen, das Rechenwerk eine Mehrzahl von Addierwerken oder Inkrementierern enthält, deren Verarbeitungsbreite (z.B. 12,4,4,4 und 4,4,4,12) den Parts (z.B. 12,4,4,4 und 4,4,4,12) der Speicherzellen entspricht und die bei Erreichen ihres maximalen Werts diesen Wert festhalten und die Addition einstellen, und daß ein Steuerteil (WinComp) im Rechenwerk, das die Koordinaten (WinCoordinates) der einzelnen Fenster im zu verarbeitenden Bild kennt, entscheidet, ob der aktuelle Bildpunkt mit seinen Koordinaten innerhalb oder außerhalt eines bzw. mehreren Fenstern liegt.

## Beschreibung

Die Erfindung bezieht sich auf ein verfahren zur Erstellung und Auswertung von Histogrammen zwecks Bildauswertung, insbesondere zur Erkennung von Objekten, bei welchem eine Kamera einen Bilddatenstrom zu einem Prozessor liefert und der Prozessor die Grauwertverteilung und statistische Kenngrößen der Grauwertverteilung liefert.

Üblicherweise wird ein auszuwertendes Bild oder ein räumlicher Gegenstand auf einer Unterlage mit Hilfe einer Videokamera abgetastet. Hierbei geht die Kamera im Sinne eines Rasters zeilen- und spaltenweise über die gesamte Bildfläche hinweg. Die Kamera nimmt Grauwerte auf und kann diese beispielsweise in 256 unterschiedliche Grauwerte unterteilen. Für jeden Rasterpunkt liefert dann die Videokamera einen digitalen Wert zwischen 0 und 256, der der an der entsprechenden Stelle herrschenden Graufärbung entspricht. "O" könnte für vollkommen weiß und "256" für vollkommen schwarz stehen.

Der nunmehr vorliegende Datenstrom enthält also für jeden Bildpunkt eine Zahl zwischen 0 und 256, was einer relativ großen Datenmenge entspricht wenn man an 260 000 Rasterpunkte für einen einzigen Bildausschnitt denkt, wobei man bestrebt ist, diese Zahl auf mehr als 1 Million zu erhöhen.

Die nächste Arbeitsstufe bei einem Verfahren mit 256 Rasterpunkten bzw. Grauwerten ist, daß nunmehr die Häufigkeit festgestellt wird, mit der jeder der 256 Grauwerte anfällt. Wird ein Bild abgetastet, bei dem 1/3 vollkommen schwarz ist und 2/3 vollkommen weiß ist, so würde dies ein Balkendiagramm mit einer Säule von 2/3 bei dem Wert O und einer Säule von 1/3 bei dem Wert 256 ergeben. Die gleiche Verteilung würde aber auch auftreten, wenn jeder dritte Rasterpunkt schwarz und die anderen weiß wären. Tastet man jedoch ein bestimmtes Objekt ab, so ergibt sich irgendeine Kurve der Häufigkeiten zwischen den Grenzen 0 und 256, wobei man davon ausgehen kann, daß alle Grauwerte um 0 nichts mit dem Objekt zu tun haben, während alle Grauwerte im Bereich bei 256 die gewünschten Informationen über das Objekt enthalten. Könnte man nun hier eine Abtrennung vornehmen, und üblicherweise kann man eine solche Grenze bei 180 festlegen, so kann man 2/3 aller Grauwerte des Histogramms unterdrücken und die Auswertung auf den verbleibenden Teil beschränken. Nunmehr könnte man diesen Teil der Kurve erneut der Bildverarbeitung zuführen und würde eine Verteilung erhalten, bei welcher nur im Bereich der dunkeln Graustufen eine charakteristische Kurve vorliegt. Man könnte diese Verteilung mit zuvor gespeicherten Verteilungen vergleichen und bei Übereinstimmung auf einen bestimmten Gegenstand oder einen Buchstaben oder dergl. schließen.

Mit Hilfe der vorliegenden Erfindung kann man nun bestimmte kritische Bereiche eines Bildes herausgreifen und braucht nicht das gesamte Bild auszuwerten, sondern eben nur diesen Teilbereich oder einige wenige Bereiche, beispielsweise vier Fenster, wobei diese Fenster in ihren Begrenzungen jeweils frei gewählt werden können und auch gegenseitig überlappen können. Auf diese Art und Weise können die Fenster unabhängig voneinander über kritische Stellen gelegt werden, um die dort enthaltenen Informationen aufzunehmen, auszuwerten und dem eigentlichen Zweck, nämlich der Bilderkennung, zuzuführen.

Ein wesentliches Merkmal der vorliegenden Erfindung ist, daß aufgrund der relativ geringen Datenmenge, die nun noch zu verarbeiten ist, tatsächlich schritthaltend gearbeitet werden kann, d.h. der Bewegung der Kamera über den Bildausschnitt folgend werden ausgewertete Informationen zur Verfügung gestellt, was bislang nicht möglich war, weil zu viele Informationen zu verarbeiten waren.

Auch ist für das Verfahren gemäß der Erfindung von besonderer Bedeutung, daß die einzelnen Bildausschnitte frei positioniert werden können und dabei sogar Überlappungen möglich sind. Dadurch können bei der Objekterkennung die einzelnen Bildausschnitte an die Form des gesuchten Gegenstandes angepaßt festgelegt werden, was bei bekannten Verfahren nicht möglich war, da diese gegeneinander abgegrenzte Fensterbereiche und gleich große Fenster erforderten.

Die Erfindung wird nachfolgend anhand der Figuren beispielsweise erläutert.
- Fig. 1: zeigt schematisch die Architektur eines Histogrammprozessors für das Verfahren gemäß der Erfindung.
- Fig. 2: zeigt eine Speicherzelle mit 8 Parts und den hiermit möglichen Konfigurationen bzw. Speicheraufteilungen.

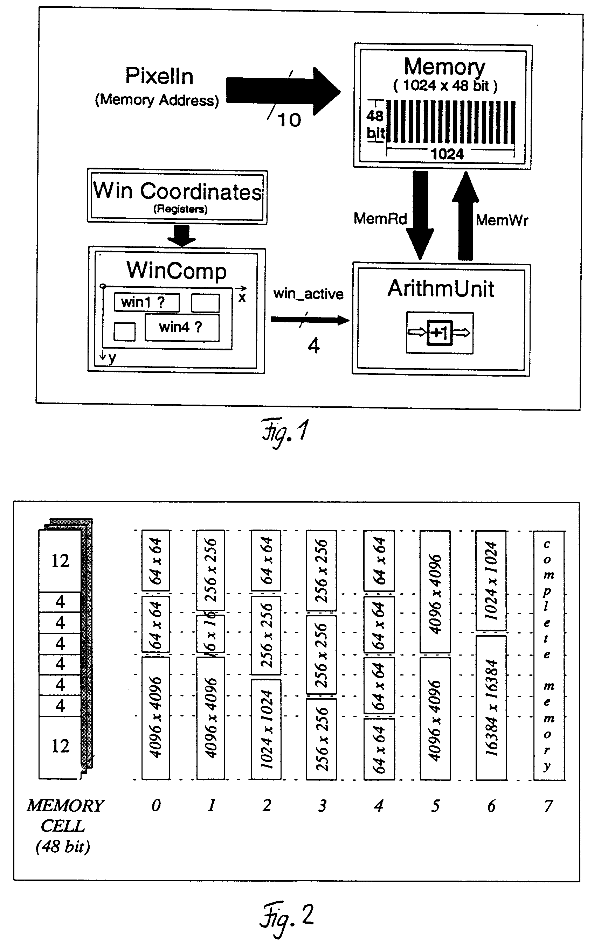

Die gängige Methode zur Realisierung eines Histogrammschaltkreises bedient sich hauptsächlich zweier Komponenten, vergl. Fig. 1. Dies ist zum einen der Speicher (Memory) und zum anderen das Rechenwerk (ArithmUnit).

Die Erfüllung der Aufgabe, die Häufigkeitsverteilung der Grauwerte (Intensitäten in Bildpunkten, hier:PixelIn) innerhalb eines Bildes zu bestimmen, geschieht durch den folgenden Arbeitszyklus: Der Grauwert (PixelIn) adressiert den Speicher und wählt damit eine der (hier 1024) Speicherzellen aus. Der Wert in dieser Speicherzelle wird über das Signal MemRd von dem Rechenwerk (ArithmUnit) gelesen, um eins erhöht (inkrementiert) und über die Signalleitung MemWr zurück in die noch ausgewählte Speicherzelle geschrieben.

Neu ist nun, daß gleichzeitig in mehreren voneinander unabhängigen, frei im Bild positionierbaren und sich überlappen könnenden Fenstern Histogramme berechnet werden. Dies bedarf einer speziellen Speicherorganisation/-aufteilung und einem entsprechenden Rechenwerk. Da auch die Fenster in Anzahl und Größe wählbar sein sollen, muß eine Speicherorganisation gefunden werden, die verschiedene Konfigurationen (der Fenster) zuläßt.

Diese Speicherorganisation ist in Fig. 2 beispielsweise dargestellt und unterteilt alle Speicherzellen (jeweils die Häufigkeit eines Grauwertes repräsentierend) in einzelne Parts, die einer Konfiguration (Fensterauswahl) entsprechend zusammengeschaltet (kaskadiert) werden.

Vorzugsweise wird der Speicher nur virtuell, d.h. nicht physikalisch unterteilt. Der Speicher bleibt ein ganzer Block. Die Parts (entsprechende Bitstellen in einer Speicherzelle) werden als zu einem bestimmten Fenster in der ausgewählten Konfiguration zugehörend interpretiert. Der Speicher ist somit in beliebige Parts unterteilbar.

Dagegen wird im Rechenwerk eine entsprechende Menge von kleineren Addierwerken bzw. Inkrementierer vorgehalten, die gemäß gewählter Konfiguration miteinander verschaltet (kaskadiert) werden. Diese Addierwerke haben genau die gleiche Verarbeitungsbreite (Bitbreite) wie die Parts der Speicherzelle in Fig. 2 einer bestimmtn Konfiguration.

In Konfiguration 5 wird so jeweils eine Einheit der Breite 12 bit und drei Einheiten der Breite 4 bit zu einem (Fenster)-Rechenwerk zusammengefügt. Mit diesen 24 Bit kann maximal ein Bild der Größe 4096x4096 (2¹²x2¹²) Bildpunkte hineinpassen, sofern im ungünstigsten Fall das Bild in jedem Bildpunkt den gleichen Grauwert hätte und somit eine Speicherzelle für dieses Fenster aufgefüllt und die restlichen leer wären. In Konfiguration 5 können zwei Fenster der Größe 4096x4096 Bildpunkte eingepaßt werden.

Wird in einem einzelnen Fensterbereich (einer Speicherzelle) der maximale Wert erreicht, d.h. alle Stellen sind mit "1" ausgefüllt, so wird dieser Wert festgehalten. Ein weiteres Addieren von "1" würde einen Übertrag und damit eine Änderung einer Bitstelle in einem anders interpretierten Bereich (Fenster) zur Folge haben und den Inhalt dieses Fensterbereiches auf "0...=" setzen. Ein "Überlauf" (gegenseitige Beeinflussung der Fenster) ist somit von "Fenster zu Fenster" nicht möglich.

Um dem Rechenwerk mitzuteilen, ob sich der aktuelle Bildpunkt in einem der vorgewählten Fenster befindet und somit die zum Fenster gehörende Addierer-/Inkrementiererkaskade den Wert im Speicherbereich für dieses Fenster um eins erhöhen soll, ist die Komponente WinComp vorgeschaltet. Sie kennt die Koordinaten der einzelnen Fenster im Gesamtbild und entscheidet, ob der aktuelle Bildpunkt mit seinen Koordinaten innrhalb (lokal) eines der voreingestellten Fenster liegt. Es ist auch denkbar, daß die Komponente WinComp neben rechteckigen auch beliebige Formen der Fenster realisiert. Dies kann man sich so vorstellen, daß in einem zusätzlichen Speicher (WinCoordinate) die Masken für beliebige Fensterformen gehalten werden.

## Patentansprüche

1. Verfahren zur Erstellung und Auswertung von Histogrammen zwecks Bildauswertung, insbesondere zur Erkennung von Objekten, bei welchen eine Kamera einen Bilddatenstrom liefert, die Grauwerte (Pixel In) bzw. Intensitäten der einzelnen Bildpunkte des Bilddatenstroms jeweils eine bestimmte Speicherstelle eines Speichers ( Memory z. B. 1024 Speicherzellen mit jeweils 48 bit) adressieren, der Speicherwert dieser Speicherzelle in ein Rechenwert (ArithmUnit) gegeben, mit HIlfe eines Inkrementierers um eins erhöht und sodann in die bestimmte Speicherzelle zurückgeschrieben wird, dadurch gekennzeichnet, daß jede Speicherzelle des Speichers in einzelne Parts (z.B. in Parts mit 12,4,4,4,4,4,4 und 12 bit) physikalisch unterteilt oder virtuell unterteilt wird, die einzelnen Parts der Speicherzellen unabhängig voneinander zu Paketen zusammengeschaltet bzw. kaskadiert werden, die jeweils die Histogrammwerte in sich überlappenden oder nicht überlappenden Fenstern im zu verarbeitenden Bild aufnehmen, das Rechenwerk eine Mehrzahl von Addierwerken oder Inkrementierern enthält, deren Verarbeitungsbreite (z.B. 12,4,4,4 und 4,4,4,12) den Parts, (z.B. (z.B. 12,4,4,4 und 4,4,4,12) der Speicherstellen entspricht und die bei Erreichen ihres maximalen Werts diesen Wert festhalten und die Addition einstellen, und daß ein Steuerteil (WinComp) im Rechenwerk, das die Koordinaten (WinCoordinates) der einzelnen Fenster im zu verarbeitenden Bild kennt, entscheidet, ob der aktuelle Bildpunkt mit seinen Koordinaten innerhalb oder außerhalt eines bzw. mehreren Fenstern liegt.
